# EUROPEAN PATENT SPECIFICATION

(11) **EP 4 646 321 B1**
(45) Date of publication and mention of the grant of the patent: **09.12.2026**
(21) Application number: 23834192.9
(22) Date of filing: 20.12.2023
(51) Int. Cl.: B29C 64/118, B29C 64/321, B29C 64/393, B33Y 10/00, B33Y 50/02, B33Y 80/00

(54) **A METHOD FOR MANUFACTURING A 3D ITEM BY MEANS OF FDM PRINTING**
VERFAHREN ZUR HERSTELLUNG EINES 3D-ARTIKELS MITTELS FDM-DRUCK
PROCÉDÉ DE FABRICATION D'UN ARTICLE 3D AU MOYEN D'UNE IMPRESSION FDM

(30) Priority: 03.01.2023 EP 23150112
(43) Date of publication of application: 12.11.2025
(73) Proprietor: Signify Holding B.V., 5656 AE Eindhoven (NL)
(72) Inventor: HIKMET, Rifat, Ata, Mustafa, 5656 AE Eindhoven (NL); VAN BOMMEL, Ties, 5656 AE Eindhoven (NL)
(74) Representative: Verweij, Petronella Daniëlle
(86) International application number: PCT/EP2023/086797
(87) International publication number: WO 2024/146788

(56) References cited:
- WO-A1-2021/175780

## Description

### FIELD OF THE INVENTION

The invention relates to a method of manufacturing an object by means of 3D printing, in particular by means of fused deposition modelling. The invention also relates to an object obtainable with such a method of manufacturing, and to a lighting device comprising such an object. The invention further relates to a computer program product comprising instructions which, when the computer program product is executed by a 3D printer, cause the 3D printer to carry out the method of manufacturing.

### BACKGROUND OF THE INVENTION

Digital manufacturing is expected to increasingly transform the nature of global manufacturing. One of the main processes used in digital manufacturing is 3D printing. The term "3D printing" refers to processes wherein a material is joined or solidified under computer control to create a three-dimensional object of almost any shape or geometry. Such three-dimensional objects are typically produced using data from a three-dimensional model, and usually by successively adding material layer by layer.

Many different 3D printing technologies are known in the art.

US5121329 discloses an apparatus incorporating a movable dispensing head provided with a supply of material which solidifies at a predetermined temperature, and a base member, which are moved relative to each other along "X", "Y", and "Z" axes in a predetermined pattern to create three-dimensional objects by building up material discharged from the dispensing head onto the base member at a controlled rate. This 3D printing technology is known as fused deposition modeling (FDM).

FDM, also called fused filament fabrication (FFF) or filament 3D printing (FDP), is one of the most commonly used forms of 3D printing. In an FDM process, a 3D printer creates an object in a layer-by-layer manner by extruding a printable material (typically a filament of a thermoplastic material) along tool paths that are generated from a digital representation of the object. The printable material is heated above the melting temperature for semicrystalline polymers and above the glass transition temperature of amorphous polymers and extruded through a nozzle of a print head of the 3D printer. The extruded printable material fuses to previously deposited material and solidifies upon a reduction in temperature. In a typical 3D printer, the printable material is deposited as a sequence of planar layers onto a substrate that defines a build plane. The position of the print head relative to the substrate is then incremented along a print axis (perpendicular to the build plane), and the process is repeated until the object is complete.

FDM printers are relatively fast, low cost and can be used for printing complicated three-dimensional objects. Such printers are used in printing various shapes using various 3D printable materials. The technique is also being further developed in the production of LED luminaires and lighting solutions.

It is further desired, especially when using 3D printed items in lighting solutions, to create areas with different optical properties.

WO2021175780.A1 discloses a method where single layers of a wall consist of two or more strands. Changing the sides of those strands is used to control color, reflectivity, transmissivity, or other optical properties.

### SUMMARY OF THE INVENTION

It is an object of the present invention to at least partly overcome one or more of the aforementioned disadvantages of the prior art, or to provide a useful alternative.

In a first aspect, the invention provides a method for manufacturing an object by means of FDM printing, wherein the method comprises depositing a 3D printable material at a flow rate through a nozzle having a nozzle temperature to provide the 3D item comprising a stack of layers of 3D printed material. The 3D printable material is a thermoplastic polymer with a weight average molecular weight higher than two times the entanglement molecular weight of the thermoplastic polymer.
The method further comprises transitioning between a first printing stage and a second printing stage, wherein the first printing stage comprises depositing the 3D printable material to form a first 3D printed material, wherein the 3D printable material is printed at a first nozzle temperature TN1 and a first flow rate FR1 such that the 3D printable material is printed below a critical shear rate. The second printing stage comprises depositing the 3D printable material to form a second 3D printed material, wherein the 3D printable material is printed with a second nozzle temperature TN2 and a second flow rate FR2, such that the 3D printable material is printed above a critical shear rate.

With the method according to the first aspect of the invention, a 3D item can be manufactured that has different sections, printed during the two different printing stages, in which the first and second 3D printed materials have different surface properties. The first 3D printed material printed during the first printing stage has a smooth surface, in other words the surface roughness amplitude is very low. The second 3D printed material printed during the second printing stage has a less smooth surface with a higher surface roughness amplitude. Depending on the 3D printable material used, different aesthetically pleasing or optical effects can be achieved. Further depending on the implementation of the method, this can be achieved using only one single nozzle and one 3D printable material. This has the advantage that switching printer nozzles and materials while printing the 3D item is not necessary, removing the risk for defects at the place the nozzles are changed.

The method comprises the step of layer-wise depositing (during a printing stage) a 3D printable material. Herein, the term "3D printable material" refers to the material to be deposited or printed, and the term "3D printed material" refers to the material that is obtained after deposition. These materials may be essentially the same, as the 3D printable material may especially refer to the material in a printer head or extruder at elevated temperature and the 3D printed material refers to the same material, but in a later stage when deposited. The 3D printable material is printed as a filament and deposited as such. The 3D printable material may be provided as filament or may be formed into a filament. Hence, whatever starting materials are applied, a filament comprising 3D printable material is provided by the printer head and 3D printed. Herein, the term "3D printable material" may also be indicated as "printable material". The term "thermoplastic polymer" may in embodiments refer to a blend of different polymers, but may in embodiments also refer to essentially a single polymer type with different polymer chain lengths. Hence, the terms "polymeric material" or "polymer" may refer to a single type of polymers but may also refer to a plurality of different polymers. The term "printable material" may refer to a single type of printable material but may also refer to a plurality of different printable materials. The term "printed material" may refer to a single type of printed material but may also refer to a plurality of different printed materials.

Hence, the term "3D printable material" may also refer to a combination of two or more materials. In general, these (polymeric) materials have a glass transition temperature T_{g} and/or a melting temperature Tₘ. The 3D printable material will be heated by the 3D printer before it leaves the nozzle to a temperature of at least the glass transition temperature, and in general at least the melting temperature. Hence, in a specific embodiment the 3D printable material comprises a thermoplastic polymer having a glass transition temperature (T_{g}) and /or a melting point (Tₘ), and the printer head action comprises heating the 3D printable material above the glass transition and if it is a semi-crystalline polymer above the melting temperature. In yet another embodiment, the 3D printable material comprises a (thermoplastic) polymer having a melting point (Tₘ), and the printer head action comprises heating the 3D printable material to be deposited on the receiver item to a temperature of at least the melting point. The glass transition temperature is in general not the same thing as the melting temperature. Melting is a transition which occurs in crystalline polymers. Melting happens when the polymer chains fall out of their crystal structures, and become a disordered liquid. The glass transition is a transition which happens to amorphous polymers; that is, polymers whose chains are not arranged in ordered crystals, but are just strewn around in any fashion, even though they are in the solid state. Polymers can be amorphous, essentially having a glass transition temperature and not a melting temperature or can be (semi) crystalline, in general having both a glass transition temperature and a melting temperature, with in general the latter being larger than the former.

As indicated above, the invention thus provides a method comprising providing a filament of 3D printable material and printing (during a printing stage) said 3D printable material on a substrate, to provide said 3D item.

The phrase "printing on a receiver item" and similar phrases include amongst others directly printing on the receiver item, or printing on a coating on the receiver item, or printing on 3D printed material earlier printed on the receiver item. The term "receiver item" may refer to a printing platform, a print bed, a substrate, a support, a build plate, or a building platform, etc.. Instead of the term "receiver item" also the term "substrate" may be used. The phrase "printing on a receiver item" and similar phrases include amongst others also printing on a separate substrate on or comprised by a printing platform, a print bed, a support, a build plate, or a building platform, etc.. Therefore, the phrase "printing on a substrate" and similar phrases include amongst others directly printing on the substrate, or printing on a coating on the substrate or printing on 3D printed material earlier printed on the substrate. Here below, further the term substrate is used, which may refer to a printing platform, a print bed, a substrate, a support, a build plate, or a building platform, etc., or a separate substrate thereon or comprised thereby.

Layer by layer printable material is deposited, by which the 3D printed item is generated (during the printing stage). The 3D printed item may show a characteristic ribbed structure (originating from the deposited filaments). However, it may also be possible that after a printing stage, a further stage is executed, such as a finalization stage. This stage may include removing the printed item from the receiver item and/or one or more post processing actions. One or more post processing actions may be executed before removing the printed item from the receiver item and/or one more post processing actions may be executed after removing the printed item from the receiver item. Post processing may include e.g. one or more of polishing, coating, adding a functional component, etc.. Post-processing may include smoothening the ribbed structures, which may lead to an essentially smooth surface.

Materials that qualify as 3D printable material in the method of this invention are thermoplastic polymer materials with a weight average molecular weight of more than two times the entanglement molecular weight of the thermoplastic polymer.
The weight average molecular weight is the sum of the weights of all the chains of a polymer, divided by the total number of chains. The entanglement molecular weight is a material property for every thermoplastic polymer and characterizes the magnitude of entanglements of polymeric materials.

In an example the weight average molecular weight of the thermoplastic polymer may be larger than 10000 g/mol.

Materials that may qualify as 3D printable materials can be selected from the group consisting of (thermoplastic) polymers, and silicones. Especially, the 3D printable material may comprise a (thermoplastic) polymer selected from the group consisting of polystyrenes, polyacrylonitrile, acrylonitrile butadiene styrene (ABS), polyamides (such as nylon), polyacetates, polyesters (such as polylactic acid (PLA) and polyethylene terephthalate (PET)), polyacrylates (such as polymethylmethacrylate (PMMA)), poly alkanes(such as low-density polyethylene (LDPE) and high-density polyethylene (HDPE), polypropylenes), polyvinyl chloride (PVC), polycarbonate (PC), fluorinated polymers such as polyvinyl fluoride (PVDF) sulfide containing polymers (such as polysulfone), and polyurethanes and their copolymers.

The 3D printable material is printed at a flow rate, also referred to as material deposition rate. The flow rate is measured in weight or volume per second.

In the method of this invention 3D printable is printed above and below a critical shear rate. The critical shear rate is a term known in the processing of polymers. The critical shear rate is the shear rate in a printer nozzle at which a thermoplastic polymer exceeds a critical value at a particular temperature and flow rate.

The printable material is printed on a receiver item. Especially, the receiver item can be the printing platform, or it can be a part of the printing platform. The receiver item can also be heated during 3D printing. However, the receiver item may also be cooled during 3D printing.

In another example, transitioning between the first and the second printing stage may be performed a plurality of times during the manufacturing of the 3D item. Transitioning between the two printing stages more than once creates the opportunity to create optical or decorative patterns on the surface of the 3D item.

Alternatively or in addition, transitioning between the first printing stage and the second printing stage may be performed in a gradual transition, such that the nozzle temperature and/or the flow rate may be adjusted in a plurality of steps between TN1 and TN2, and/or between FR1 and FR2. A gradual transition between the two printing stages gives additional possibilities to vary the decorative and optical effects that may be generated with the method of this invention.

The first 3D printed material and the second 3D printed material may be printed using the same thermoplastic polymer. Using the same thermoplastic polymer for the first and second 3D printed materials has the advantage that the 3D printable material deposited during the first and second printing stages may be deposited from the same nozzle. Printing the whole 3D item from the same nozzle may eliminate defects at the place within the 3D item where nozzles would have to be changed when printing with multiple nozzles.

Even though the first 3D printed material and the second 3D printed material may be printed using the same material, they may also be deposited from two printer nozzles. This may save time during the print process since the printer settings, such as the first and second nozzle temperature and the first and second flow rate, may stay constant and there is no need to wait for heating or cooling of the nozzle for example.

Alternatively, the first 3D printed material and the second 3D printed material may be printed using different thermoplastic polymers. Using two different thermoplastic polymers may have the same time saving advantages as printing the same thermoplastic polymer from two nozzles. In addition, it also offers the possibility to print with two different materials having additional differentiating properties, such as for example differences in color, transparency, light transmissivity, or light reflectivity.

The transition between the first and the second printing stage may be performed after depositing a first layer and before depositing an adjacent second layer of the stack of layers of 3D printed material. In other words, the transition may be performed after depositing, during a first printing stage, one or more complete layers of the stack of layers of 3D printed material. The interface between the first and second 3D printed material is thus in between two layers of 3D printed material. In this way, a 3D item may be obtained which has an upper and a lower section with different optical properties, or a striped appearance for example.

Alternatively, the transition between the first and the second printing stage may be performed within a layer of the stack of layers of 3D printed material. In other words, the interface between the first and the second 3D printed material is within one layer of 3D printed material. In this way, a 3D item may be obtained which has for example a front side having one optical property and a back side having a second optical property. Also more intricate patterns, such as for example a checkerboard pattern may be realized.

In another example, the second nozzle temperature TN2 may be lower than the first nozzle temperature TN1, while the second flow rate FR2 may be the same as the first flow rate FR1.

Alternatively, the first nozzle temperature TN1 and the second nozzle temperature TN2 may be the same temperature, while the second flow rate FR2 is higher than the first flow rate FR1.

The critical shear rate depends, among other parameters, on the nozzle temperature and the flow rate. During the 3D printing process the nozzle temperature and the flow rate may both be varied to transition from the first printing stage to the second printing stage. The first nozzle temperature TN1 thus being different from second nozzle temperature TN2 and the first flow rate FR1 being different from the second flow rate FR2. However, it may be most practical to keep one of the two factors constant, while the other one is varied to achieve printing the 3D printable material first below a critical shear rate, and secondly above a critical shear rate.

In yet another example the first 3D printed material, deposited during the first printing stage, may be transparent, and the second 3D printed material, deposited during the second printing stage, may be light diffusive. This makes it is possible to create a 3D printed item which is has two or more sections having a difference in light transmission, such that one section is transparent and the other is light diffusive.

Alternatively, the first 3D printed material, deposited during the first printing stage, may be specularly reflective, and the second 3D printed material, deposited during the second printing stage, may be diffusely reflective. This makes it possible to create a 3D printed item which has two or more sections showing different types of light reflection. The first 3D printed material shows specular reflection, meaning that the surface of the first 3D printed material can be described as shiny, glossy, polished, or smooth. The second 3D printed material shows diffuse reflection, meaning that the surface of the second 3D printed material can be described as matte, dull, flat, or not glossy.

In a second aspect, the invention provides a computer program product comprising instructions which, when the computer program product is executed by a computer which is functionally coupled to or comprised by a 3D printer, cause the 3D printer to carry out the method according to the first aspect.

Such computer program product can be loaded on a computer comprised by a 3D printer. The computer program product may include a computer-readable medium. The computer-readable medium and/or memory may be any recordable medium (e.g., RAM, ROM, removable memory, CD-ROM, hard drives, DVD, floppy disks or memory cards) or may be a transmission medium (e.g., a network comprising fiber-optics, the world-wide web, cables, and/or a wireless channel using, for example, time-division multiple access, code-division multiple access, or other wireless communication systems). Any medium known or developed that can store information suitable for use with a computer system may be used as the computer-readable medium and/or memory. Additional memories may also be used. The computer-readable medium, The memory may be a long-term, short-term, or a combination of long- and-short term memories. The term memory may also refer to memories. The memory may configure the processor/controller to implement the methods, operational acts, and functions disclosed herein. The memory may be distributed or local and the processor, where additional processors may be provided, may be distributed or singular. The memory may be implemented as electrical, magnetic or optical memory, or any combination of these or other types of storage devices. Moreover, the term "memory" should be construed broadly enough to encompass any information able to be read from or written to an address in the addressable space accessed by a processor. With this definition, information on a network, such as the Internet, is still within memory, for instance, because the processor may retrieve the information from the network. The controller/processor and the memory may be any type. The processor may be capable of performing the various described operations and executing instructions stored in the memory. The processor may be an application-specific or general-use integrated circuit(s). Further, the processor may be a dedicated processor for performing in accordance with the present system or may be a general-purpose processor wherein only one of many functions operates for performing in accordance with the present system. The processor may operate utilizing a program portion, multiple program segments, or may be a hardware device utilizing a dedicated or multi- purpose integrated circuit.

In a third aspect, the invention provides an object obtainable with the method according to the first aspect.

In an example according to the third aspect, the first 3D printed material may have a first surface, and the second 3D printed material may have a second surface. The first surface may have a surface roughness amplitude of less than 1 micrometer, such that the first surface may be free from sharkskin or melt fracture effects. The second surface may have a surface roughness amplitude of more than 1 micrometer, such that the second surface may show a sharkskin or melt fracture effect.

During the second printing stage, the 3D printable material is printed above a critical shear rate. The second 3D printed material may have a higher surface roughness amplitude of more than 1 micrometer. Printing a thermoplastic polymer above its critical shear rate may result in the onset of the so-called sharkskin effect and/or in melt fracture effects, also known as for example elastic turbulence or bambooing. These effects may cause distortion of the flow of the 3D printable material, resulting in a periodic surface defect having a surface roughness amplitude and frequency.

In another example, the first 3D printed material, deposited during the first printing stage, may be transparent, and the second 3D printed material, deposited during the second printing stage, may be light diffusive. This makes it is possible to create a 3D printed item which is has two or more sections having a difference in light transmission, such that one section is transparent and the other is light diffusive.

Alternatively, the first 3D printed material, deposited during the first printing stage, may be specularly reflective, and the second 3D printed material, deposited during the second printing stage, may be diffusely reflective. This makes it possible to create a 3D printed item which has two or more sections showing different types of light reflection. The first 3D printed material shows specular reflection, meaning that the surface of the first 3D printed material can be described as shiny, glossy, polished, or smooth. The second 3D printed material shows diffuse reflection, meaning that the surface of the second 3D printed material can be described as matte, dull, flat, or not glossy.

As indicated above, the 3D printed item maybe used for different purposes. Amongst others, the 3D printed item maybe used in lighting. Hence, in yet a further aspect the invention also provides a lighting device comprising the 3D item as defined herein. In a specific aspect the invention provides a lighting system comprising (a) a light source configured to provide (visible) light source light and (b) the 3D item as defined herein, wherein 3D item may be configured as one or more of (i) at least part of a housing, (ii) at least part of a wall of a lighting chamber, and (iii) a functional component, wherein the functional component may be selected from the group consisting of an optical component, a support, an electrically insulating component, an electrically conductive component, a thermally insulating component, and a thermally conductive component. Hence, in specific examples the 3D item may be configured as one or more of (i) at least part of a lighting device housing, (ii) at least part of a wall of a lighting chamber, and (iii) an optical element. As a relative smooth surface may be provided, the 3D printed item may be used as mirror or lens, etc... In examples, the 3D item may be configured as shade. A device or system may comprise a plurality of different 3D printed items, having different functionalities.

Instead of the term "fused deposition modeling (FDM) 3D printer" shortly the terms "3D printer", "FDM printer" or "printer" may be used. The printer nozzle may also be indicated as "nozzle" or sometimes as "extruder nozzle".

### BRIEF DESCRIPTION OF THE DRAWINGS

Embodiments of the invention will now be described, by way of example only, with reference to the accompanying schematic drawings in which corresponding reference symbols indicate corresponding parts, and in which:
Figs. 1a-1c schematically depict some general aspects of a 3D printer and of a 3D printed material;
Fig. 2 shows a schematic diagram depicting the behavior of a typical thermoplastic polymer when processed by a 3D printer;
Figs. 3a-3b schematically depict some aspects in relation to a 3D printed material;
Fig. 4 schematically depicts some further aspects in relation to a 3D printed material;
Fig. 5 shows a schematic diagram of a transition between a first printing stage and a second printing stage;
Figs. 6a-6b schematically depict some further aspects in relation to a 3D printed material and a 3D item;
Fig. 7 shows a flow diagram for experiments; and
Fig. 8 schematically depicts an application.

The schematic drawings are not necessarily to scale.

### DETAILED DESCRIPTION OF THE EMBODIMENTS

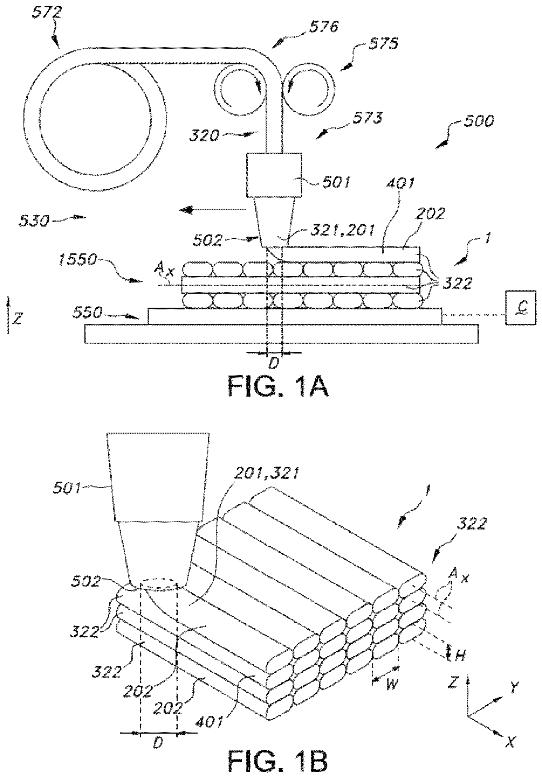

Fig. 1a schematically depicts some aspects of the 3D printer 500. Reference 530 indicates the functional unit configured to 3D print, especially FDM 3D printing; this reference may also indicate the 3D printing stage unit. Here, only the printer head 501 for providing 3D printed material, such as an FDM 3D printer head is schematically depicted. The 3D printer 500 may include a plurality of printer heads. Reference 502 indicates a printer nozzle. The 3D printer of the present invention may include a plurality of printer nozzles. Reference 320 indicates a filament of printable 3D printable material 201 (such as indicated above). For the sake of clarity, not all features of the 3D printer have been depicted, only those that are of especial relevance for the present invention (see further also below). Reference 321 indicates extrudate (of 3D printable material 201).

The 3D printer 500 is configured to generate a 3D item 1 by layer-wise depositing on a receiver item 550, which may at least temporarily be cooled, a plurality of layers 322 wherein each layer 322 comprises 3D printable material 201, such as having a melting point Tₘ. The 3D printable material 201 may be deposited on a substrate 1550 (during the printing stage). By deposition, the 3D printable material 201 has become 3D printed material 202. 3D printable material 201 escaping from the nozzle 502 is also indicated as extrudate 321. Reference 401 indicates thermoplastic material.

The 3D printer 500 may be configured to heat the filament 320 material upstream of the printer nozzle 502. This may e.g. be done with a device comprising one or more of an extrusion and/or heating function. Such device is indicated with reference 573 and is arranged upstream from the printer nozzle 502 (i.e. in time before the filament material leaves the printer nozzle 502). The printer head 501 may (thus) include a liquefier or heater. Reference 201 indicates printable material. When deposited, this material is indicated as (3D) printed material, which is indicated with reference 202.

Reference 572 indicates a spool or roller with material, especially in the form of a wire, which may be indicated as filament 320. The 3D printer 500 transforms this in an extrudate 321 downstream of the printer nozzle 502 which becomes a layer 322 on the receiver item or on already deposited printed material. In general, the diameter of the extrudate 321 downstream of the nozzle 502 is reduced relative to the diameter of the filament 320 upstream of the printer head 501. Hence, the printer nozzle is sometimes (also) indicated as extruder nozzle. Arranging layer 322 by layer 322, a 3D item 1 may be formed. Reference 575 indicates the filament providing device, which here amongst others include the spool or roller and the driver wheels, indicated with reference 576.

Reference A indicates a longitudinal axis or filament axis.

Reference C schematically depicts a control system, such as especially a temperature control system configured to control the temperature of the receiver item 550. The control system C may include a heater which is able to heat the receiver item 550 to at least a temperature of 50 °C, but especially up to a range of about 350 °C, such as at least 200 °C.

Alternatively or additionally, the receiver plate may also be moveable in one or two directions in the x-y plane (horizontal plane). Further, alternatively or additionally, the receiver plate may also be rotatable about z axis (vertical). Hence, the control system may move the receiver plate in one or more of the x-direction, y-direction, and z-direction.

Alternatively, the printer 500 can have a head 501 that can also rotate during printing. Such a printer has an advantage that the printed material cannot rotate during printing.

Layers are indicated with reference 322, and have a layer height H and a layer width W.

Note that the 3D printable material 201 is not necessarily provided as filament 320 to the printer head. Further, the filament 320 may also be produced in the 3D printer 500 from pieces of 3D printable material.

Reference D indicates the diameter of the nozzle (through which the 3D printable material 201 is forced).

Fig. 1b schematically depicts in 3D in more detail the printing of the 3D item 1 under construction. Here, in this schematic drawing the ends of the filaments 321 in a single plane are not interconnected, though in reality this may be the case.

Reference H indicates the height of a layer. Layers are indicated with reference 322. Here, the layers have an essentially circular cross-section. Often, however, they may be flattened, such as having an outer shape resembling a flat oval tube or flat oval duct (i.e. a circular shaped bar having a diameter that is compressed to have a smaller height than width, wherein the sides (defining the width) are (still) rounded).

Hence, Figs. 1a-1b schematically depict some aspects of a fused deposition modeling 3D printer 500, comprising (a) a first printer head 501 comprising a printer nozzle 502, (b) a filament providing device 575 configured to provide a filament 321 comprising 3D printable material 201 to the first printer head 501, and optionally (c) a receiver item 550. In Figs. 1a-1b, the first or second printable material or the first or second printed material are indicated with the general indications printable material 201 and printed material 202, respectively. Directly downstream of the nozzle 502, the filament 321 with 3D printable material becomes, when deposited, layer 322 with 3D printed material 202.

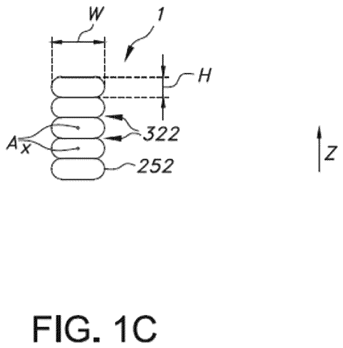

Fig. 1c schematically depicts a stack of 3D printed layers 322, each having a layer height H and a layer width W. Note that in specific examples the layer width and/or layer height may differ for two or more layers 322. Reference 252 in Fig. 1c indicates the item surface of the 3D item (schematically depicted in Fig. 1c).

Referring to Figs. 1a-1c, the filament of 3D printable material 321 that is deposited leads to a layer having a height H (and width W). Depositing layer 322 after layer 322, the 3D item 1 is generated. Fig. 1c very schematically depicts a single-walled 3D item 1.

In common 3D printing processes, the 3D printable material is printed below a critical shear rate. In general, it is typically desired to process polymers below the critical shear rate to achieve a stable melt flow and a surface which is free from any surface defects, such as sharkskin effect or melt fracture effects.

A significant amount of research has been performed on the topics of critical shear rate, sharkskin effect, and melt fractures during polymer extrusion. These effects are known to the skilled person and definitions can for example be found in the book "Polymer Technology Dictionary" by Tony Whelan (1994, Chapman & Hall, ISBN 0 412 58180 0, page 243, 389).

Research sought to understand these effects occurring during polymer extrusion and the factors that influence it. Consequently, most of the research efforts were aimed at preventing or delaying the onset of sharkskin and melt fracture effects, by for example adding additives to polymer materials, or by adapting extrusion dies and print heads.

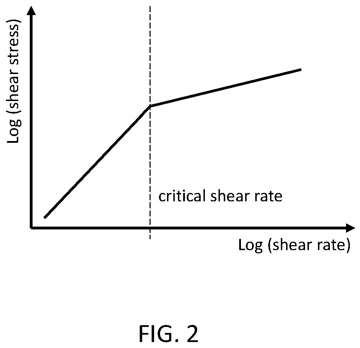

Fig. 2 shows a schematic diagram depicting the behavior of a typical thermoplastic polymer when processed by a 3D printer 500. On the logarithmic axis of abscissas the shear rate is shown, while on the logarithmic axis of ordinates the shear stress is denoted. At low shear rates the shear stress increases proportionally to the shear rate. Once the critical shear rate is reached, the behavior and the properties of the polymer melt during 3D printing change. This is characterized by a sharp bent in the line of the polymer on the diagram, after which the slope of the line changes. Printing a thermoplastic polymer at shear rates above the critical shear rate results in onset of sharkskin and/or melt fracture effects.

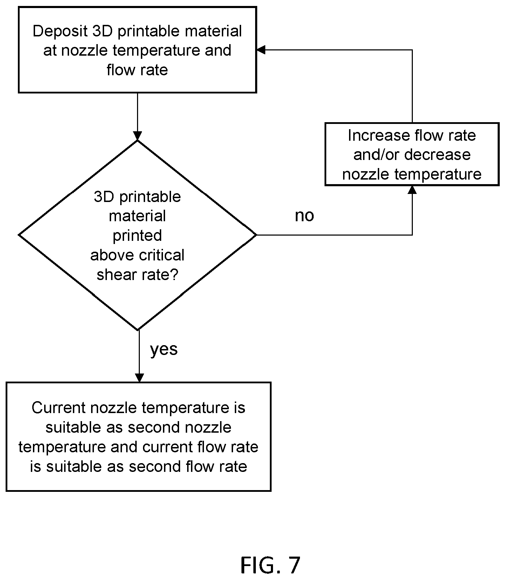

Measurements showing this typical behavior of thermoplastic polymers have for example been published in *"*Control of the sharkskin instability in the extrusion of polymer melts using induced temperature gradients" (Erik Miller et al., Rheol Acta (2004) 44: 160-173, figure 7).

The main factors that influence the onset of sharkskin effects and melt fracture effects are: the nozzle temperature (the critical shear rate increases with increasing temperature), the flow rate or deposition speed, the average molecular weight and the average molecular weight distribution (the higher the weight, the lower the critical shear rate), the entanglement molecular weight, and the geometry of the printer nozzle, especially its diameter and length.

The method of this invention makes use of the phenomena of critical shear rate, sharkskin effect, and melt fractures to create 3D printed items having different sections with different optical properties and/or surface structures.

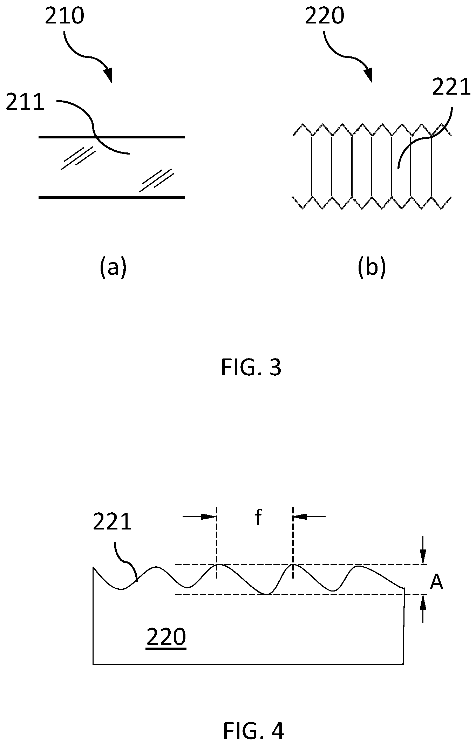

Fig. 3a schematically depicts the first 3D printed material 210 deposited during the first printing stage. During the first printing stage the 3D printable material 201 is deposited to form a first 3D printed material 210. The 3D printable material 201 is printed at a first nozzle temperature TN1 and a first flow rate FR1 such that the 3D printable material 201 is printed below a critical shear rate. Printing a thermoplastic polymer below a critical shear rate yields a first 3D printed material 210 having a first surface 211 which is smooth. The first surface 211 has essentially no or very little surface roughness and the surface roughness amplitude lies below 1 micrometer. The term surface roughness amplitude refers to the surface roughness within one layer 322 of the first 3D printed material 210. It does not refer to the surface roughness which is created by depositing 3D printable material 201 layer 322 on layer 322, thereby creating an interlayer roughness often inherent to and characteristic for 3D printed items.

Since the first 3D printed material 210 is printed below a critical shear rate, the first surface is free from sharkskin effects and/or melt fracture effects. Depending on the type of thermoplastic polymer used as 3D printable material 201, the first 3D printed material 210 may be transparent, enabled by its low surface roughness. In other examples for other 3D printable materials 201, the surface may show specular reflection, be glossy, shiny, or smooth.

Fig. 3b schematically depicts the second 3D printed material 220 deposited during the second printing stage. During the second printing stage the 3D printable material 201 is deposited to form a second 3D printed material 220. During this second printing stage, the 3D printable material 201 is printed at a second nozzle temperature TN2 and a second flow rate FR2 such that the 3D printable material 201 is printed above a critical shear rate. Printing a thermoplastic polymer above a critical shear rate typically results in a second 3D printed material 220 having a second surface 221, which is not smooth. The second surface 221 has a higher surface roughness amplitude than the first surface 211. Also here, the term surface roughness amplitude refers to the surface roughness within one layer 322 of the second 3D printed material 210. The surface roughness amplitude of the second surface may be larger than 1 micrometer, or may be larger than 10 micrometer, or may be larger than 100 micrometer, or may lie in between 1 and 300 micrometer.

Since the second 3D printed material 220 is printed above a critical shear rate, the second surface 221 exhibits a sharkskin effect and/or melt fracture effects, also called for example elastic turbulence or bambooing. Depending on the type of thermoplastic polymer used as 3D printable material 201, the second 3D printed material 211 may be light diffusive, due to its high surface roughness. In other examples for other 3D printable materials 201, the surface may show diffuse reflection, be matte, dull, or flat.

Fig. 4 schematically depicts a magnified view of the second surface 221 of the second 3D printed material. 220. As mentioned above the second 3D printed material 220 is printed above a critical shear rate, and the second surface 221 therefore exhibits sharkskin effect or melt fracture effects. The specific form of the effect may vary from one polymer to another but is generally periodically repeating at a certain frequency f and with a surface roughness amplitude A. The effect can manifest in transversal ridges, but the second surface 211 may also show ripples, helical distortions, or kinks. Independent of the specific manifestation of the effect, the surface roughness amplitude A of the second surface 211 is measured within one period of the effect, from the lowest point of the second surface 211 to the highest point of the second surface 211.

Materials that may be suitable for use in the method of this invention are thermoplastic polymers which have a critical shear rate, and where printing above a critical shear rate is possible within the parameter range of the 3D printer 500 used to generate the 3D item 1. The parameters influencing the critical shear rate for a specific material on a 3D printer 500 are the dimensions and the material of the nozzle 502, the nozzle temperature, and the flow rate. Different nozzles can be used for printing a 3D item 1 and for each nozzle 502, both the nozzle temperature and the flow rate can be varied within a specific range. If a critical shear rate for this 3D printable material 201 exists within the range of those parameters, this material is suitable for use in the method of this invention.

Thermoplastic polymers with a high weight average molecular weight may be especially suitable, since for those materials the onset of sharkskin and melt fracture effects happens at lower shear rates. Of special importance is the relation of the weight average molecular weight to the entanglement molecular weight. The weight average molecular weight may be higher than two times the entanglement molecular weight of the thermoplastic polymer.

The weight average molecular weight of the 3D printable material 201 of this invention may further be above 10000 g/mol, but may also above 20000 g/mol, may be above 25000g/mol, or may also be above 35000 g/mol. The 3D printable material 201 should not contain any additives which prevent the onset of the sharkskin effect or melt fracture effects.

A different way of characterizing materials suitable for this invention may be through their viscosity. Thermoplastic polymers that may qualify as 3D printed material in the method of this invention have a weight average molecular weight higher than the critical weight average molecular weight (M_{c}) above which the viscosity shows a rapid increase.

The viscosity of the polymer thus also plays an important role. The viscosity of a polymer is a temperature dependent variable. Therefore, in examples, the 3D printable material is printed above and below a critical temperature at a given shear rate.

During the first printing stage the 3D printable material has a low viscosity resulting in a stable melt flow during the deposition of the 3D printable material. The viscosity of the 3D printable material changes significantly during the second printing stage. The 3D printable material now shows a high viscosity resulting in sharkskin or melt fracture effects.

In an example, the viscosity of the 3D printable material changes from a first viscosity in the first printing stage with a first nozzle temperature TN1, to a second viscosity in the second printing stage with a second nozzle temperature, the change in viscosity being in the range from 3000-300 Pa·s, measured at a shear rate of 50 s⁻¹.

In the finished 3D item 1 a stack of layers 322 may take different shapes and sizes. The stack of layers 322 may have at least 10 layers, at least 50 layers, or at least 100 layers. Which part of the stack of layers 322 is printed using the first printing stage and which part is printed using the second printing stage can also vary significantly depending on how the method is implemented. A few examples are described hereafter, but it should be noted that the person skilled in the art will be able to design many more alternatives for printing a 3D item 1 using the method of this invention.

In its most basic implementation, the 3D item 1 consists of a stack of layers 322, where the first part of the stack of layers 322 has been printed by depositing one or more layers of 3D printable material 201 during the first printing state, and the second part of the stack of layers 322 has been printed depositing one or more layers of 3D printable material 201 during the second printing stage. Hence, a 3D item 1 is created which has one transition from first to second printing stage, resulting for example in a 3D item 1 having a transparent lower part and a diffusive upper part.

The transition between the first and the second printing stage may also happen multiple times during the creation of the 3D item 1. In this way for example a striped appearance of glossy and matte areas can be obtained.

The transition between the first and the second printing stage may happen in one single step, transitioning directly from TN1 to TN2 and/or directly from FR1 to FR2. This creates a hard change of the optical properties from the first 3D printed material 210 to the second 3D printed material 220.

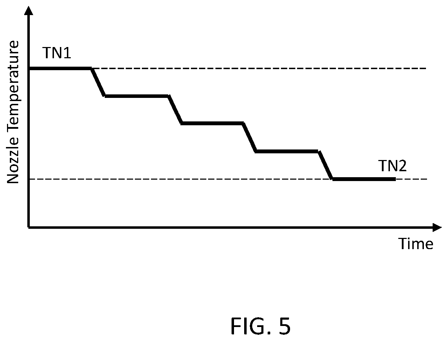

Fig. 5 schematically shows a schematic diagram of an alternative implementation. Here the transition between the first printing stage and the second printing stage happens gradually in a plurality of steps while depositing one or layers. In this specific example the nozzle temperature is decreased in four steps, starting at TN1 and ending at TN2. In other examples, alternatively or in addition, the flow rate may be increased in several steps. The number of steps may be more than 3, more than 10, or more than 100. In fact, the number of steps may be chosen in such a way that there is a basically stepless adjustment between the first and the second printing stage. A gradual transition between the printing stages has the advantage that also the optical properties change gradually while depositing one or more layers 322 of the stack of layers 322. Thus, for example a 3D item 1 may be created which has a gradual transition from transparent to diffusive,

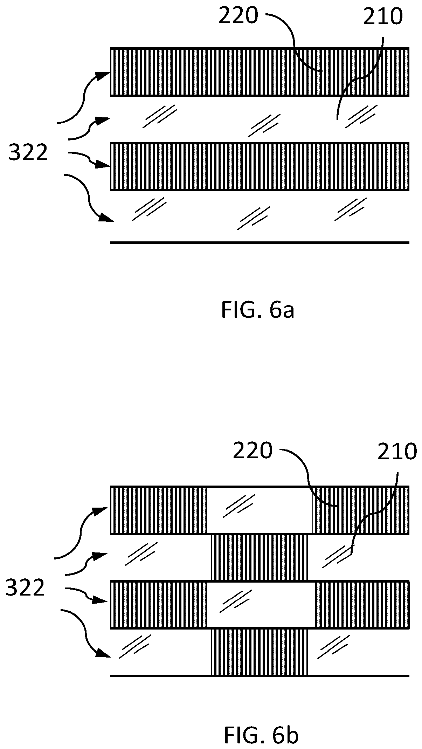

Fig. 6a schematically shows an example wherein transitioning between the first and the second printing stage may be performed after depositing one or more complete layers 322 of the stack of layers 322 of 3D printed material 202. First, one or more layers 322 of the stack of layers 322 may be printed in the first printing stage. Subsequently, one or more layers 322 of the stack of layers 322 may be printed in the second printing stage. Thus, transitioning between the first and the second printing stage is performed after depositing a first layer 322 and before depositing an adjacent second layer 322 and an interface between the first 3D printed material 210 and the second 3D printed material 220 is therefore located between two layers 322. This transition may repeat a plurality of times to obtain the full stack of layers 322 needed to complete the 3D item 1. The transition may happen every layer, or every other layer, or every fifth layer for example. The number of layers 322 deposited before transitioning from one printing stage to the other may be variable, changing the number of layers at every transition.

Fig. 6b schematically shows an example wherein transitioning between the first and the second printing stage is performed within a layer 322 of the stack of layers 322 of 3D printed material 202. Thus, an interface between the first 3D printed material 210 and the second 3D printed material 220 is located within a layer 322. The respective layer 322 has sections printed in the first printing stage and sections printed in the second printing stage. The transition between the first and the second printing stage may happen once within one single layer 322 of the stack of layers 322, but it may also happen a plurality of times within one single layer 322 of the stack of layers 322. The neighboring layers 322 may have the same sections, but they may also have different sections. Like this it is possible to create a 3D item 1 that is, for example, transparent on one side and diffusive from the other side. It may also be possible to achieve more complex patterns, like for example a checkerboard design, or a simple logo or pictogram embedded in the stack of layers 322.

As described above, the critical shear rate depends on several factors. Thus, for every 3D printer 500 configuration and for every 3D printable material 201 a critical shear rate needs to be identified experimentally.

Fig. 7 shows a basic flow chart depicting an example method on how a critical shear rate can be easily determined in practice. As a start, the 3D printable material 201 needs to be deposited at a nozzle temperature and a flow rate. This first set of settings can be chosen freely, but an example of a suitable first setting would be using the first nozzle temperature and the first flow rate. These are typically standard printing conditions, potentially recommended even by the manufacturer of the 3D printable material 201. The 3D printable material is deposited and it is observed whether it is printed above a critical shear rate. This is easily assessed by observing the surface of the 3D printed material 202 for sharkskin or melt fracture effects. If the 3D printable material 201 was not printed above a critical shear rate, the flow rate and/or the nozzle temperature should be increased with a certain amount, which can be chosen freely as well. The 3D printable material 201 is deposited again at these new printing conditions and the surface of the 3D printed material 202 is again inspected for sharkskin effect or melt fracture effects. This process repeats until a critical shear rate has been reached. At this point the current nozzle temperature is suitable as second nozzle temperature for the second printing stage, and the current flow rate is suitable as second flow rate.

Experiments with the method of this invention were performed in-house with several different thermoplastic polymers, such as polycarbonate, polypropylene, and PHA.

Experiments were performed with standard polycarbonate as 3D printable material 201. The printer nozzle 502 had a nozzle diameter of 1.8 mm and a nozzle length of 2 mm. During the first printing stage, the first nozzle temperature was 290 °C and the first flow rate was 4 g/s. During the second printing stage the second nozzle temperature was chosen to be 250 °C and the second flow rate was higher than 4 g/s.

Using these parameters and using transparent polycarbonate, it was possible to obtain a 3D item 1 having transparent and diffuse areas. Similarly, using white polycarbonate, it was possible to obtain a 3D item 1 having glossy and matte areas.

Experiments were also performed with polypropylene. The printer nozzle 502 had a nozzle diameter of 1.8 mm and a nozzle length of 2 mm. During the first printing stage, the first nozzle temperature was 310 °C and the first flow rate was 1.3 g/s. During the second printing stage the second nozzle temperature was chosen to be 250 °C and the second flow rate was 2.4 g/s.

Using these parameters, it was possible to obtain a 3D item 1 having shiny and matte areas.

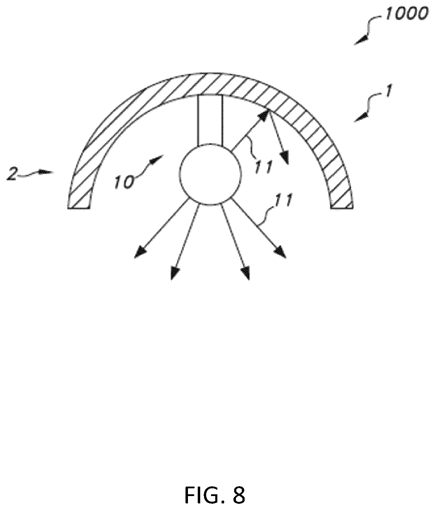

Fig. 8 schematically depicts an example of a lamp or luminaire 2, which comprises a light source 10 for generating light 11. The lamp 2 may comprise a housing or shade or another element, which may comprise or be the 3D printed item 1. Here, the half sphere (in cross-sectional view) schematically indicates a housing or shade. The lamp or luminaire 2 may be or may comprise a lighting device 1000 (which comprises the light source 10). Hence, the lighting device 1000 comprises the 3D item 1. The 3D item 1 may be configured as one or more of (i) at least part of a lighting device housing, (ii) at least part of a wall of a lighting chamber, and (iii) an optical element. Hence, the 3D item 1 may be reflective for light source light 11 and/or transmissive for light source light 11. Here, the 3D item 1 may e.g. be a housing or shade.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The scope of the invention is defined by the appended claims.

## Claims

1. A method for manufacturing a 3D item (1) by means of Fused Deposition Modeling, FDM, printing, the method comprising depositing a 3D printable material (201) at a flow rate through a nozzle (502) having a nozzle temperature to provide the 3D item (1) comprising a stack of layers (322) of 3D printed material (202);
- wherein the 3D printable material (201) is a thermoplastic polymer having a weight average molecular weight higher than two times the entanglement molecular weight of the thermoplastic polymer;
- wherein the method further comprises transitioning between a first printing 10 stage and a second printing stage;
- wherein the first printing stage comprises depositing the 3D printable material (201) to form a first 3D printed material (210), wherein the 3D printable material (201) is printed at a first nozzle temperature TN1 and a first flow rate FR1 such that the 3D printable material (201) is printed below a critical shear rate; and
- wherein the second printing stage comprises depositing the 3D printable material (201) to form a second 3D printed material (220), wherein the 3D printable material (201) is printed with a second nozzle temperature TN2 and a second flow rate FR2, such that the 3D printable material (201) is printed above a critical shear rate.

2. The method according to claim 1, wherein the weight average molecular weight of the thermoplastic polymer is larger than 10000 g/mol.

3. The method according to any one of the preceding claims, wherein the 3D printable material is selected from the group of polystyrenes, polyacrylonitrile, acrylonitrile 25 butadiene styrene (ABS), polyamides, polyacetates, polyesters, polyacrylates, poly alkanes, polycarbonate (PC), fluorinated polymers such as polyvinyl fluoride (PVDF), polyurethanes and their copolymers.

4. The method according to any one of the preceding claims, wherein transitioning between the first and the second printing stage is performed a plurality of times during the manufacturing of the 3D item (1).

5. The method according to any one of the preceding claims, wherein transitioning between the first printing stage and the second printing stage is performed in a gradual transition, such that the nozzle temperature and/or the flow rate are adjusted in a plurality of steps between TN1 and TN2, and/or between FR1 and FR2.

6. The method according to any one of the preceding claims, wherein the first 3D printed material (210) and the second 3D printed material (220) are printed using the same thermoplastic polymer.

7. The method according to any one of claims 1-6, wherein transitioning between the first and the second printing stage is performed after depositing a first layer (322) and before depositing an adjacent second layer (322) of the stack of layers (322) of 3D printed material (202).

8. The method according to any one of claims 1-6, wherein transitioning between the first and the second printing stage is performed within a layer (322) of the stack of layers (322) of 3D printed material (202).

9. The method according to any one of the preceding claims, wherein (i) TN2 < TN1 and FR2 = FR1 or (ii) TN2 = TN1 and FR2 > FR1.

10. A computer program product comprising instructions which, when the computer program product is executed by a computer which is functionally coupled to or comprised by a Fused Deposition Modeling, FDM, printer (500), cause the FDM printer (500) to carry out the method according to any one of claims 1-9.

11. A 3D item (1), obtainable by the method according to any one of claims 1-9.

12. The 3D item (1) according to claim 11, wherein the first 3D printed material (210) has a first surface (211) and the second 3D printed material (220) has a second surface (221), wherein the first surface (211) has a surface roughness amplitude of less than 1 micrometer, such that the first surface (211) is free from sharkskin or melt fracture effects, and wherein the second surface (221) has a surface roughness amplitude of more than 1 micrometer, such that the second surface (221) shows a sharkskin or melt fracture effect.

13. The 3D item (1) according to any one of claims 11-12, wherein the first 3D printed material (210) deposited during the first printing stage is transparent, and wherein the second 3D printed material (220) deposited during the second printing stage is light diffusive.

14. The 3D item (1) according to any one of claims 11-12, wherein the first 3D printed material (210) deposited during the first printing stage is specularly reflective, and wherein the second 3D printed material (220) deposited during the second printing stage is diffusely reflective.

15. A lighting device (1000) comprising a light source (10) and the 3D item (1) according to any one of claims 11-14, wherein the 3D item (1) is configured as one or more of (i) at least part of a lighting device housing, (ii) at least part of a wall of a lighting chamber, and (iii) an optical element.

## Patentansprüche

1. Verfahren zum Herstellen eines 3D-Gegenstands (1) mittels Schmelzschichtungsdrucken, FDM-Drucken, das Verfahren umfassend ein Abscheiden eines 3D-druckbaren Materials (201) mit einer Strömungsgeschwindigkeit durch eine Düse (502), die eine Düsentemperatur aufweist, um den 3D-Gegenstand (1) bereitzustellen, umfassend einen Stapel von Schichten (322) aus 3D-gedrucktem Material (202);
- wobei das 3D-druckbare Material (201) ein thermoplastisches Polymer ist, das ein Gewichtsmittel des Molekulargewichts aufweist, das höher als das Zweifache des Verhakungsmolekulargewichts des thermoplastischen Polymers ist;
- wobei das Verfahren ferner ein Übergehen zwischen einer ersten Druckstufe und einer zweiten Druckstufe umfasst;
- wobei die erste Druckstufe das Abscheiden des 3D-druckbaren Materials (201) umfasst, um ein erstes 3D-gedrucktes Material (210) auszubilden, wobei das 3D-druckbare Material (201) bei einer ersten Düsentemperatur TN1 und einer ersten Strömungsgeschwindigkeit FR1 derart gedruckt wird, dass das 3D-druckbare Material (201) unterhalb einer kritischen Scherrate gedruckt wird; und
- wobei die zweite Druckstufe das Abscheiden des 3D-druckbaren Materials (201) umfasst, um ein zweites 3D-gedrucktes Material (220) auszubilden, wobei das 3D-druckbare Material (201) mit einer zweiten Düsentemperatur TN2 und einer zweiten Strömungsgeschwindigkeit FR2 derart gedruckt wird, dass das 3D-druckbare Material (201) oberhalb einer kritischen Scherrate gedruckt wird.

2. Verfahren nach Anspruch 1, wobei das Gewichtsmittel des Molekulargewichts des thermoplastischen Polymers größer als 10000 g/mol ist.

3. Verfahren nach einem der vorstehenden Ansprüche, wobei das 3D-druckbare Material aus der Gruppe von Polystyrolen, Polyacrylnitril, AcrylnitrilButadien-Styrol (ABS), Polyamiden, Polyacetaten, Polyestern, Polyacrylaten, Polyalkanen, Polycarbonat (PC), fluorierten Polymeren wie Polyvinylfluorid (PVDF), Polyurethanen und deren Copolymeren ausgewählt ist.

4. Verfahren nach einem der vorstehenden Ansprüche, wobei das Übergehen zwischen der ersten und der zweiten Druckstufe während des Herstellens des 3D-Gegenstands (1) eine Vielzahl von Malen durchgeführt wird.

5. Verfahren nach einem der vorstehenden Ansprüche, wobei das Übergehen zwischen der ersten Druckstufe und der zweiten Druckstufe in einem allmählichen Übergehen derart durchgeführt wird, dass die Düsentemperatur und/oder die Strömungsgeschwindigkeit in einer Vielzahl von Schritten zwischen TN1 und TN2 und/oder zwischen FR1 und FR2 eingestellt werden.

6. Verfahren nach einem der vorstehenden Ansprüche, wobei das erste 3D-gedruckte Material (210) und das zweite 3D-gedruckte Material (220) unter Verwendung desselben thermoplastischen Polymers gedruckt werden.

7. Verfahren nach einem der Ansprüche 1 bis 6, wobei das Übergehen zwischen der ersten und der zweiten Druckstufe nach dem Abscheiden einer ersten Schicht (322) und vor dem Abscheiden einer angrenzenden zweiten Schicht (322) des Stapels von Schichten (322) aus 3D-gedrucktem Material (202) durchgeführt wird.

8. Verfahren nach einem der Ansprüche 1 bis 6, wobei das Übergehen zwischen der ersten und der zweiten Druckstufe innerhalb einer Schicht (322) des Stapels von Schichten (322) aus 3D-gedrucktem Material (202) durchgeführt wird.

9. Verfahren nach einem der vorstehenden Ansprüche, wobei (i) TN2 < TN1 und FR2 = FR1 oder (ii) TN2 = TN1 und FR2 > FR1.

10. Computerprogrammprodukt, das Anweisungen umfasst, die, wenn das Computerprogrammprodukt durch einen Computer ausgeführt wird, der an einen Schmelzschichtungsdrucker, FDM-Drucker, (500) funktionell gekoppelt oder dadurch umfasst ist, bewirken, dass der FDM-Drucker (500) das Verfahren nach einem der Ansprüche 1 bis 9 vornimmt.

11. 3D-Gegenstand (1), der durch das Verfahren nach einem der Ansprüche 1 bis 9 erhältlich ist.

12. 3D-Gegenstand (1) nach Anspruch 11, wobei das erste 3D-gedruckte Material (210) eine erste Oberfläche (211) aufweist und das zweite 3D-gedruckte Material (220) eine zweite Oberfläche (221) aufweist, wobei die erste Oberfläche (211) eine Oberflächenrauheitsamplitude von weniger als 1 Mikrometer derart aufweist, dass die erste Oberfläche (211) frei von Haifischhaut- oder Schmelzbrucheffekten ist, und wobei die zweite Oberfläche (221) eine Oberflächenrauheitsamplitude von mehr als 1 Mikrometer derart aufweist, dass die zweite Oberfläche (221) einen Haifischhaut- oder Schmelzbrucheffekt zeigt.

13. 3D-Gegenstand (1) nach einem der Ansprüche 11 bis 12, wobei das erste 3D-gedruckte Material (210), das während der ersten Druckstufe abgeschieden wird, transparent ist, und wobei das zweite 3D-gedruckte Material (220), das während der zweiten Druckstufe abgeschieden wird, lichtstreuend ist.

14. 3D-Artikel (1) nach einem der Ansprüche 11 bis 12, wobei das erste 3D-gedruckte Material (210), das während der ersten Druckstufe abgeschieden wird, spiegelnd reflektierend ist, und wobei das zweite 3D-gedruckte Material (220), das während der zweiten Druckstufe abgeschieden wird, diffus reflektierend ist.

15. Beleuchtungsvorrichtung (1000), umfassend eine Lichtquelle (10) und den 3D-Gegenstand (1) nach einem der Ansprüche 11 bis 14, wobei der 3D-Gegenstand (1) als eines oder mehrere von (i) mindestens einem Teil eines Beleuchtungsvorrichtungsgehäuses, (ii) mindestens einem Teil einer Wand einer Beleuchtungskammer und (iii) einem optischen Element konfiguriert ist.

## Revendications

1. Procédé permettant de fabriquer un article 3D (1) au moyen d'une impression à modélisation par dépôt en fusion, FDM, le procédé comprenant le dépôt d'un matériau imprimable en 3D (201) à un débit d'écoulement à travers une buse (502) ayant une température de buse pour fournir l'article 3D (1) comprenant un empilement de couches (322) de matériau imprimé en 3D (202) ;
- dans lequel le matériau imprimable en 3D (201) est un polymère thermoplastique ayant une masse moléculaire moyenne en poids supérieure à deux fois la masse moléculaire à enchevêtrement du polymère thermoplastique ;
- dans lequel le procédé comprend en outre la transition entre une première phase d'impression et une seconde phase d'impression ;
- dans lequel la première phase d'impression comprend le dépôt du matériau imprimable en 3D (201) pour former un premier matériau imprimé en 3D (210), dans lequel le matériau imprimable en 3D (201) est imprimé à une première température de buse TN1 et un premier débit d'écoulement FR1 de telle sorte que le matériau imprimable en 3D (201) est imprimé en dessous d'un taux de cisaillement critique ; et
- dans lequel la seconde phase d'impression comprend le dépôt du matériau imprimable en 3D (201) pour former un second matériau imprimé en 3D (220), dans lequel le matériau imprimable en 3D (201) est imprimé avec une seconde température de buse TN2 et un second débit d'écoulement FR2, de telle sorte que le matériau imprimable en 3D (201) est imprimé au-dessus d'un taux de cisaillement critique.

2. Procédé selon la revendication 1, dans lequel la masse moléculaire moyenne en poids du polymère thermoplastique est plus grande que 10 000 g/mol.

3. Procédé selon l'une quelconque des revendications précédentes, dans lequel le matériau imprimable en 3D est choisi dans le groupe de polystyrènes, polyacrylonitrile, acrylonitrile butadiène styrène (ABS), polyamides, polyacétates, polyesters, polyacrylates, polyalcanes, polycarbonate (PC), polymères fluorés tels que fluorure de polyvinyle (PVDF), polyuréthanes et leurs copolymères.

4. Procédé selon l'une quelconque des revendications précédentes, dans lequel la transition entre la première et la seconde phase d'impression est mise en œuvre une pluralité de fois pendant la fabrication de l'article 3D (1).

5. Procédé selon l'une quelconque des revendications précédentes, dans lequel la transition entre la première phase d'impression et la seconde phase d'impression est mise en œuvre dans une transition progressive, de telle sorte que la température de buse et/ou le débit d'écoulement sont ajustés en une pluralité d'étapes entre TN1 et TN2, et/ou entre FR1 et FR2.

6. Procédé selon l'une quelconque des revendications précédentes, dans lequel le premier matériau imprimé en 3D (210) et le second matériau imprimé en 3D (220) sont imprimés à l'aide du même polymère thermoplastique.

7. Procédé selon l'une quelconque des revendications 1 à 6, dans lequel la transition entre la première et la seconde phase d'impression est mise en œuvre après dépôt d'une première couche (322) et avant dépôt d'une seconde couche (322) adjacente de l'empilement de couches (322) de matériau imprimé en 3D (202).

8. Procédé selon l'une quelconque des revendications 1 à 6, dans lequel la transition entre la première et la seconde phase d'impression est mise en œuvre au sein d'une couche (322) de l'empilement de couches (322) de matériau imprimé en 3D (202).

9. Procédé selon l'une quelconque des revendications précédentes, dans lequel (i) TN2 < TN1 et FR2 = FR1 ou (ii) TN2 = TN1 et FR2 > FR1.

10. Produit programme informatique comprenant des instructions qui, lorsque le produit programme informatique est exécuté par un ordinateur qui est couplé fonctionnellement à, ou compris par une imprimante à modélisation par dépôt en fusion, FDM, (500), amènent l'imprimante FDM (500) à effectuer le procédé selon l'une quelconque des revendications 1 à 9.

11. Article 3D (1), pouvant être obtenu par le procédé selon l'une quelconque des revendications 1 à 9.

12. Article 3D (1) selon la revendication 11, dans lequel le premier matériau imprimé en 3D (210) a une première surface (211) et le second matériau imprimé en 3D (220) a une seconde surface (221), dans lequel la première surface (211) a une amplitude de rugosité de surface inférieure à 1 micromètre, de telle sorte que la première surface (211) est exempte d'effets de peau de requin ou de fracture à l'état fondu, et dans lequel la seconde surface (221) a une amplitude de rugosité de surface de plus de 1 micromètre, de telle sorte que la seconde surface (221) présente un effet de peau de requin ou de fracture à l'état fondu.

13. Article 3D (1) selon l'une quelconque des revendications 11 à 12, dans lequel le premier matériau imprimé en 3D (210) déposé pendant la première phase d'impression est transparent, et dans lequel le second matériau imprimé en 3D (220) déposé pendant la seconde phase d'impression diffuse la lumière.

14. Article 3D (1) selon l'une quelconque des revendications 11 à 12, dans lequel le premier matériau imprimé en 3D (210) déposé pendant la première phase d'impression est à réflexion spéculaire, et dans lequel le second matériau imprimé en 3D (220) déposé pendant la seconde phase d'impression est réfléchissant par diffusion.

15. Dispositif d'éclairage (1000) comprenant une source de lumière (10) et l'article 3D (1) selon l'une quelconque des revendications 11 à 14, dans lequel l'article 3D (1) est conçu en tant qu'un ou plusieurs parmi (i) au moins une partie d'un logement de dispositif d'éclairage, (ii) au moins une partie d'une paroi d'une chambre d'éclairage, et (iii) un élément optique.
